# EUROPEAN PATENT APPLICATION

(11) **EP 4 741 052 A1**
(43) Date of publication of application: **13.05.2026**
(21) Application number: 24852262.5
(22) Date of filing: 05.08.2024
(51) Int. Cl.: B01J 23/00, B01J 23/34, B01J 23/74, B01J 23/06, B01J 23/72, B01J 35/31, B01J 35/33, B01J 37/03, B01J 37/08, C25B 1/04

(54) **OXYGEN GENERATING OXIDE CATALYST FOR ANION EXCHANGE MEMBRANE WATER ELECTROLYSIS AND PREPARATION METHOD THEREFOF**

(30) Priority: 08.08.2023 KR 20230103598
(71) Applicant: Hanwha Solutions Corporation, Jung-gu Seoul 04541 (KR)
(72) Inventor: KIM, Gil Ho, Daejeon 34128 (KR); CHAE, Gyu Sik, Daejeon 34128 (KR); CHOI, Yena, Daejeon 34128 (KR)
(74) Representative: Berggren Oy
(86) International application number: PCT/KR2024/011535
(87) International publication number: WO 2025/033908

(57) **Abstract**

The present disclosure relates to an oxygen evolution reaction(OER) oxide catalyst for anion exchange membrane(MEM) water electrolysis doped with various metal atoms using a coprecipitation method, and a preparation method thereof.

## Description

### [TECHNICAL FIELD]

### CROSS-REFERENCE TO RELATED APPLICATION(S)

This application claims the benefit of Korean Patent Application No. 10-2023-0103598 filed on August 8, 2023 with the Korean Intellectual Property Office, the disclosure of which is incorporated herein by reference in its entirety.

The present disclosure relates to an oxygen generating oxide catalyst for anion exchange membrane water electrolysis having excellent catalytic activity, uniform particle size distribution, and large surface area, and a preparation method thereof, and an anode for anion exchange membrane water electrolysis and an anion exchange membrane water electrolysis system including the same.

### [BACKGROUND]

Water electrolysis technology, which produces hydrogen by electrolyzing water, was initiated in the 1800s. This technology has been commercially utilized since the 1920s. In recent years, as a necessity for renewable energy has greatly increased, the production of low-carbon, green hydrogen has been attracting attention as a solution thereof.

Representative water electrolysis technologies include an alkaline water electrolysis(AWE) and a proton exchange membrane water electrolysis(PEMWE).

The alkaline water electrolysis uses inexpensive nickel-based electrodes and porous membranes and thus has a price competitiveness. However, the gap between the porous diaphragm and the electrodes is wide, which results in high resistance and low current density. In addition, the stack volume is large, the operating cost is high, and the application of the porous diaphragm makes it difficult to rapidly change the current density, which hardly links to renewable energy sources.

The cation exchange membrane electrolysis system is MW-scale. The cation exchange membrane water electrolysis can be operated at high current density. It can be designed in a compact manner, have high hydrogen purity, and can keep initial output pressure and minimum load low. It also has a fast response speed, and thus is suitable for linking with renewable energy. Despite these advantages, it requires the use of catalysts and bipolar plates made of precious metals in order to prevent corrosion, and thus the production cost is high.

Thus, as a technology to replace the alkaline water electrolysis system and the cation exchange membrane water electrolysis system, an anion exchange membrane water electrolysis system has been proposed.

The anion exchange membrane water electrolysis system can be designed in a compact manner, and it operates in the same atmosphere as the alkaline water electrolysis system, which makes it possible to use non-precious metal materials. Therefore, this anion exchange membrane water electrolysis system can take the advantage of both the alkaline water electrolysis system and the cation exchange membrane water electrolysis system.

However, in order to improve the performance of such an anion exchange membrane water electrolysis system, in an oxidation electrode(ANODE) where an oxygen evolution reaction involving a larger overvoltage, for example, the reaction of the following reaction formula occurs, the use of an oxidation catalyst that not only exhibits excellent electrical conductivity and catalytic activity but also has high durability is required:

[Reaction Formula 1] 4*OH⁻* → *O*₂ + 2*H*₂*O* + 4*e⁻*

Considering that the above anion exchange membrane water electrolysis system is operated at a low temperature of about 100°C or less, precious metal catalysts such as IrO₂ or RuO₂ have been considered as oxidation catalysts that meet the above requirements. However, these precious metal catalysts have high unit prices, which makes it difficult to take advantage of the anion exchange membrane water electrolysis system.

Thus, in recent years, studies for applying spinel-based compounds has become active. Pure spinel(AB₂O₄) structure oxides have high intrinsic activity and excellent durability, but they fail to exhibit the same performance in actual systems. In addition, they have low electrical conductivity, and thus make them difficult to use as oxygen evolution reaction(OER) catalysts for anion exchange membrane(AEM) water electrolysis. To overcome this, a solid state method, sol-gel method, and a precipitation method, which add various dopants, have been proposed, but it is difficult to adjust the catalyst particles, and some particles have a high specific gravity, making it difficult to prepare a slurry. Further, it is difficult to synthesize a spinel structure having various metal atoms in a certain ratio.

Therefore, there is a need develop a method for efficiently synthesizing various metal atoms and a multi-component spinel structure oxide catalyst having high water electrolysis performance and uniform particle size produced thereby.

### [Prior Art Literature]

(Patent literature 1) Chinese Patent Publication No. 115224293

### [DETAILED DESCRIPTION OF THE INVENTION]

### [Technical Problem]

The present disclosure has been designed to solve the above-mentioned problems, and therefore, an object thereof is to provide an oxygen evolution reaction(OER) oxide catalyst for anion exchange membrane(AEM) water electrolysis doped with various metal atoms using a coprecipitation method, and a preparation method thereof.

### [Technical Solution]

According to one embodiment of the present disclosure, there is provided an oxidation catalyst for anion exchange membrane water electrolysis comprising a spinel-based oxide of the following Chemical Formula 1:

[Chemical Formula 1] ***Ni*₁*₋ₐXₐ*[*Co*₂*_{-b-c}Y_{b}Z_{c}*]*O*₄**

in Chemical Formula 1, (0≤a<1), (0≤b<2), and (0≤c≤2), with the proviso that both b and c are not 0.

According to another embodiment of the present disclosure, there is provided a preparation method of an oxidation catalyst for anion exchange membrane water electrolysis, the method comprising the steps of: coprecipitating a plurality of metal salts in a water solution having a pH of 11 or more in the presence of a complexing agent to form a catalyst precursor; and calcining the catalyst precursor at a temperature of 600°C or less to form a spinel-based oxide of the following Chemical Formula 1:

[Chemical Formula 1] ***Ni*₁*₋ₐXₐ*[*Co*₂*_{-b-c}Y_{b}Z_{c}*]*O*₄**

in Chemical Formula 1, (0≤a<1), (0≤b<2), and (0≤c≤2), with the proviso that both b and c are not 0.

### [Advantageous Effects]

The catalyst of the present disclosure and the catalyst prepared by the preparation method of the present disclosure have a structure in which one or more metal atoms are doped in an oxide having a spinel structure, whereby a certain level or more of the dopant is located in the crystal lattice of the metal oxide, which inhibits particle growth and forms defects, thereby increasing the number of adsorption sites of the catalyst, facilitating electron transfer, and improving performance.

### [BRIEF DESCRIPTION OF THE DRAWINGS]

FIG. 1 shows the SEM measurement surface image of the catalyst of an embodiment of the present disclosure.
FIG. 2 shows the XRD structural analysis result of the catalyst of an embodiment of the present disclosure.
FIG. 3 shows the tap density of the catalyst of an embodiment of the present disclosure.
FIG. 4 shows the particle size distribution of the catalyst of an embodiment of the present disclosure.
FIG. 5 shows the electrochemical performance evaluation result of the catalyst of an embodiment of the present disclosure.

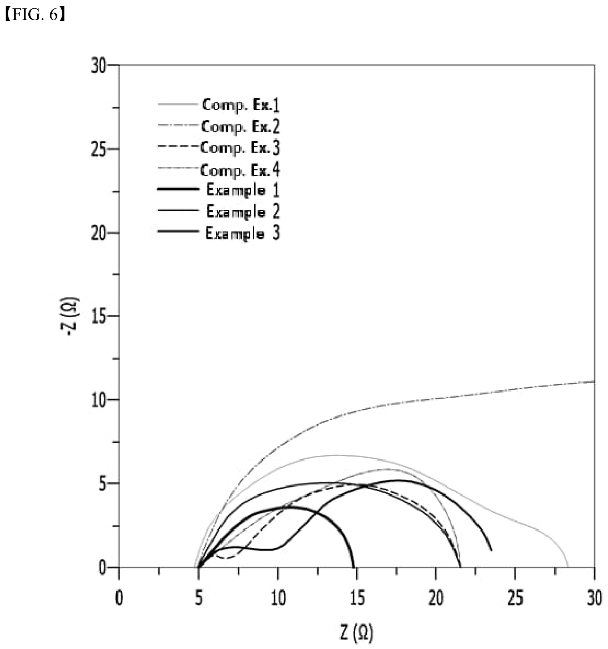

FIG. 6 shows the electrochemical EIS result of the catalyst of an embodiment of the present disclosure.
FIG. 7 shows the performance evaluation result of the anion exchange membrane(AEM) water electrolysis cell of an embodiment of the present disclosure.
FIG. 8 shows the durability evaluation result of the anion exchange membrane(AEM) water electrolysis cell of one embodiment of the present disclosure.

### [DETAILED DESCRIPTION OF THE EMBODIMENTS]

The terms "first," "second," etc. are used herein to explain various elements, and these terms are only used to distinguish one constitutional element from the other constitutional elements.

Technical terms used herein are provided to describe exemplary embodiments but are not intended to limit the present disclosure. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

And, in case it is stated that each layer or element is formed "on" or "above" each layers or elements, it means that each layer or element is formed right above each layer or element, or that other layers or elements may be additionally formed between the layers or on the object or substrate.

Although various modifications can be made to the present disclosure and the present disclosure may have various forms, specific examples will be illustrated and explained in detail below. However, it should be understood that these are not intended to limit the present disclosure to specific disclosure, and that the present disclosure includes all the modifications, equivalents or replacements thereof without departing from the spirit and technical scope of the present disclosure.

Below, an oxygen generating oxide catalyst for anion exchange membrane water electrolysis, and a preparation method thereof, and an anode for anion exchange membrane water electrolysis and an anion exchange membrane water electrolysis system including the same according to specific embodiment of the present disclosure will be described in detail.

First, in the present disclosure, the term "particle diameter Dn" refers to a particle diameter corresponding to an n% point in a particle number cumulative distribution by particle diameter. That is, D₅₀ is the particle diameter corresponding to a 50% point in the particle number cumulative distribution by particle diameter, D₉₀ is the particle diameter corresponding to a 90% point in the particle number cumulative distribution by particle diameter, and D₁₀ is the particle diameter corresponding to a 10% point in the particle number cumulative distribution by particle diameter.

The Dn may be determined using a laser diffraction method. Specifically, a powder to be analyzed is dispersed in a dispersion medium, and the dispersion is introduced into a commercially available laser diffraction particle size measuring instrument (e.g., Microtrac S3500) in which a particle size distribution is obtained by measuring a change in diffraction pattern according to a particle size while particles are passed through a laser beam. By calculating the particle diameters corresponding to the 10%, 50% and 90% points in the particle number cumulative distribution by particle diameter obtained by the measuring instrument, the D₁₀, the D₅₀ and the D₉₀ can be determined.

According to an embodiment of the present disclosure, an oxidation catalyst for anion exchange membrane water electrolysis comprising a spinel-based oxide of the following Chemical Formula 1 is provided:

[Chemical Formula 1] ***Ni*₁*₋ₐXₐ*[*Co*₂*_{-b-c}Y_{b}Z_{c}*]*O*₄**

in Chemical Formula 1, (0≤a<1), (0≤b<2), and (0≤c≤2), with the proviso that both b and c are not 0,

That is, the oxidation catalyst for anion exchange membrane water electrolysis an embodiment of the present disclosure may be a spinel-based oxide containing a dopant metal as shown in Chemical Formula 1.

Meanwhile, in Chemical Formula 1, the metal (X) is Co, Fe, Mn, Mg, Zn, or Cu, the metal (Y) is Ni, Fe, or Mn, the metal (Z) is Ni, Fe, or Mn, and the metals (Y) and (Z) are different from each other.

Specifically, the metal (X) is Cu, the metal (Y) is Ni, Fe, or Mn, the metal (Z) is Ni, Fe, or Mn, and the metals (Y) and (Z) are different from each other.

More specifically, the metal (X) may be Cu, the metal (Y) may be Fe, or Mn, and the metal (Z) may be Ni.

In addition, the oxidation catalyst for anion exchange membrane water electrolysis according to an embodiment of the present disclosure may comprise a spinel-based oxide of the following Chemical Formula 1-1 or Chemical Formula 1-2:

[Chemical Formula 1-1] *Ni*₁*₋ₐXₐ*[*Co*₂₋*_{b'}Y_{b'}*]***O*₄**

[Chemical Formula 1-2] ***Ni*[*Co_{2-b"-c"}-Y_{b"}Z_{c"}*]*O*₄**
in Chemical Formula 1-1, (0<a<1), and (0<b'<2),
in Chemical Formula 1-2, (0<b"<2), and (0<c"<2), and
the metals X, Y, and Z in the Chemical Formulas 1-1 and Chemical Formula 1-2 are the same as defined in Chemical Formula 1.

Specifically, in Chemical Formula 1-1, (0.4≤a≤0.6), and (0.4≤b'≤0.6).

Alternatively, specifically, in Chemical Formula 1-2, (0.2≤b"≤0.3), and (0.8≤c"≤0.9).

For example, the spinel-based oxide of Chemical Formula 1-1 may be Ni_{0.5}Cu_{0.5}(Co_{1.5}Fe_{0.5})O₄ or Ni_{0.5}Cu_{0.5}(Co_{1.5}Mn_{0.5})O₄, and the spinel-based oxide of Chemical Formula 1-2 may be Ni(Co_{0.9}Fe_{0.24}Ni_{0.86})O₄.

The spinel structure has an AB₂O₄ structure, wherein the A atom is located in a tetrahedral structure and the B atom is located in an octahedral structure.

The Ni atom existing in the A position of Ni(Co_{0.9}Fe_{0.24}Ni_{0.86})O₄ is located in a tetrahedral structure, and the Ni atom located in the B position is located in an octahedral structure. Therefore, despite the same Ni atoms, the structure differs depending on the position, and thus, Ni(Co_{0.9}Fe_{0.24}Ni_{0.86})O₄ may be classified as a 4-component spinel structure.

The present inventors continued their studies to develop an oxidation catalyst having excellent physical properties suitable for application to an anion exchange membrane electrolysis system. As a result of these studies, the inventors confirmed that an oxidation catalyst which is a spinel-based oxide as shown in Chemical Formula 1 and contains a dopant metal can be prepared and provided.

Therefore, compared to the existing spinel structure(AB₂O₄) to which no dopant was added, the catalyst prepared by the preparation method of the present disclosure has a structure to which a dopant is added, so that metal atoms in the crystal lattice are replaced with the dopant, whereby the structure is distorted due to the difference in metal ion size, and the crystallinity is lowered and defects may occur. These defects not only facilitate the adsorption of reactants but also serve as a passage for electron transfer. In addition, the defective site can act as an active site of the catalyst, and can facilitate the adsorption of OH⁻ ions in the oxygen evolution reaction (OER).

Ultimately, the catalyst provided by the present disclosure has a spinel structure to which a dopant is added, which may cause distortion, lower crystallinity, reduce particle size, and have a porous structure to increase surface area. Accordingly, it can be very preferably applied to an anion exchange membrane water electrolysis system and an anode (oxidation electrode) thereof.

The oxidation catalyst for anion exchange membrane electrolysis of an embodiment of the present disclosure may comprise one or more spinel-based oxides selected from the group consisting of Ni_{0.5}Cu_{0.5}(Co_{1.5}Fe_{0.5})O₄, Ni_{0.5}Cu_{0.5}(Co_{1.5}Mn_{0.5})O₄, and Ni(Co_{0.9}Fe_{0.24}Ni_{0.86})O₄.

That is, the spinel-based oxide of Chemical Formula 1 may include at least one selected from the group consisting of Ni_{0.5}Cu_{0.5}(Co_{1.5}Fe_{0.5})O₄, Ni_{0.5}Cu_{0.5}(Co_{1.5}Mn_{0.5})O₄, and Ni(Co_{0.9}Fe_{0.24}Ni_{0.86})O₄.

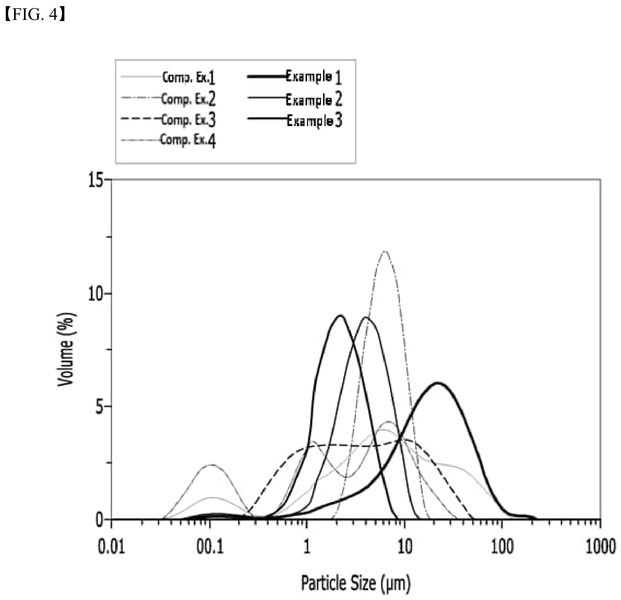

Further, according to FIG. 4, the catalyst of an embodiment of the present disclosure has a monodisperse type particle size distribution, and can have a uniform particle size with a narrow particle distribution width. The water electrolysis catalysts have more advantages when they have a monodisperse type particles with a narrow particle distribution width. The electrolysis catalysts require not only the activity of the catalyst itself but also uniform ink production. Therefore, the more uniform the particle size distribution (monodisperse type with a narrow particle width), the easier it is to produce the ink and control the ink properties (viscosity, Zeta potential, hydrodynamic radius, contact angle, etc.). In addition, as the particle distribution width is narrower, it is more advantageous for uniform mixing, it may more easily maintain the ink quality, especially the viscosity, and it can more inhibit precipitation. For this reason, catalyst surface coating is advantageous s and a high-quality coating layer can be formed, which is advantageous for commercialization.

Further, the catalyst of an embodiment of the present disclosure may have a particle diameter span ((D₉₀-D₁₀)/D₅₀) of 1.0 or more to 5.0 or less. Specifically, the span may be 1.0 or more, 1.1 or more, 1.2 or more, 1.5 or more, or 1.6 or more to 5.0 or less, 4.0 or less, 3.0 or less, 2.5 or less, or 2.0 or less. The span value may represent a particle distribution width.

It can be confirmed that as the catalyst of an embodiment of the present disclosure satisfies the above span value range, it is a monodisperse type and has a narrow particle distribution width and thus a uniform particle distribution. Further, the catalyst ink is prepared by a mixture of a catalyst, a binder (ionomer), and a solvent, whereby as the particle size distribution is more uniform, it may more easily control the quality of the catalyst ink and control the physical properties. Therefore, it is preferable that the catalyst particles satisfy the above span value range, and thus are a monodisperse type and have a narrow particle distribution width and thus a uniform particle distribution.

It can be seen that the catalyst particles of the present disclosure are formed in a uniform size compared to spinel structure catalyst particles without a dopant. This is because the dopants inhibit the growth of particles and form a flake structure, which is then aggregated during the slurry preparation process, the agglomeration is minimized by the nano flake structure. Therefore, the oxidation catalyst according to the present disclosure minimizes particle agglomeration in a slurry state and maintains a uniform particle size, so that high viscosity slurry can be produced and a uniform catalyst layer can be produced.

According to an embodiment of the present disclosure, the catalyst may have a tap density of 1 g/mL or less. Specifically, the tap density may be 0.3 g/mL or more, or 0.4 g/mL or more to 1 g/mL or less, 0.8 g/mL or less, or 0.6 g/mL or less.

The tap density of the catalyst must satisfy the above range so that layer separation does not occur during the slurry production process, and the viscosity does not increase during the slurry production process, thereby enabling uniform coating.

According to an embodiment of the present disclosure, the catalyst can exhibit an overvoltage of 310 to 360 mV at a current density of 10 mA · cm⁻². Specifically, the overvoltage may be 310 mV or more, 321 mV or more, or 330 mV or more to 360 mV or less, 355 mV or less, 350 mV or less, or 345 mV or less.

The catalyst of the present disclosure has a pure spinel structure to which a dopant is added, so that the crystallinity of the catalyst is reduced, and the overvoltage can satisfy the above range. Further, the catalyst can be easily used in an alkaline atmosphere and its catalytic performance can be increased when the overvoltage within the above range is satisfied.

The spinel-based oxide having excellent catalytic activity and electrical conductivity as described above and a large surface area can be prepared through a preparation method using a coprecipitation method. According to another embodiment of the disclosure, the preparation method of the oxidation catalyst of one embodiment is applied.

The preparation method of another embodiment of the present disclosure can precisely control the constituent atoms of the catalyst precursor and the spinel-based oxide at the atomic level using the coprecipitation method, and can prepare the spinel-based oxide particles so as to have a uniform distribution with a desired particle size range.

The preparation method comprises the steps of: coprecipitating a plurality of metal salts in a water solution having a pH of 11 or more in the presence of a complexing agent to form a catalyst precursor; and calcining the catalyst precursor at a temperature of 600°C or less to form a spinel-based oxide of the following Chemical Formula 1:

[Chemical Formula 1] ***Ni*₁*₋ₐXₐ*[*Co*₂₋*_{b-c}Y_{b}Z_{c}*]*O*₄**

in Chemical Formula 1, (0≤a<1), (0≤b<2), and (0≤c≤2), with the proviso that both b and c are not 0.

Meanwhile, in Chemical Formula 1, the metal (X) is Co, Fe, Mn, Mg, Zn, or Cu, the metal (Y) is Ni, Fe, or Mn, the metal (Z) is Ni, Fe, or Mn, and the metals (Y) and (Z) are different from each other.

Specifically, the metal (X) is Cu, the metal (Y) is Ni, Fe, or Mn, the metal (Z) is Ni, Fe, or Mn, and the metals (Y) and (Z) are different from each other.

More specifically, the metal (X) may be Cu, the metal (Y) may be Fe, or Mn, and the metal (Z) may be Ni.

In addition, the spinel-based oxide of Chemical Formula 1 may include the spinel-based oxide of the following Chemical Formula 1-1 or Chemical Formula 1-2.

[Chemical Formula 1-1] *Ni*₁*₋ₐXₐ*[*Co*₂*_{-b'}Y_{b'}*]***O*₄**

[Chemical Formula 1-2] ***Ni*[*Co_{2-b"-c"}.Y_{b"}Z_{c"}*]*O*₄**
in Chemical Formula 1-1, (0<a<1), and (0<b'<2), and
in Chemical Formula 1-2, (0<b"<2), and (0<c"<2).

The metals X, Y, and Z in Chemical Formula 1-1 and Chemical Formula 1-2 are the same as defined in Chemical Formula 1.

Specifically, in Chemical Formula 1-1, (0.4≤a≤0.6), and (0.4≤b'≤0.6).

Alternatively, specifically, in Chemical Formula 1-2, (0.2≤b"≤0.3), and (0.8≤c"≤0.9).

For example, the spinel-based oxide of Chemical Formula 1-1 may be Ni_{0.5}Cu_{0.5}(Co_{1.5}Fe_{0.5})O₄ or Ni_{0.5}Cu_{0.5}(Co_{1.5}Mn_{0.5})O₄, and the spinel-based oxide of Chemical Formula 1-2 may be Ni(Co_{0.9}Fe_{0.24}Ni_{0.86})O₄.

More specifically, the spinel-based oxide of Chemical Formula 1 may include at least one selected from the group consisting of Ni_{0.5}Cu_{0.5}(Co_{1.5}Fe_{0.5})O₄, Ni_{0.5}Cu_{0.5}(Co_{1.5}Mn_{0.5})O₄, and Ni(Co_{0.9}Fe_{0.24}Ni_{0.86})O₄.

Further, the temperature for calcining the catalyst precursor may be 600°C or less, specifically 100 to 500°C, or 300 to 500°C, and preferably 500°C. If the calcination temperature is too high, the particle size of the oxidation catalyst may increase and its surface area may decrease, and the catalytic active sites may be filled, which may adversely affect the activity of the oxidation catalyst, etc., which is not preferable.

Meanwhile, the aqueous solution having a pH of 11 or more can be formed by sequentially adding a first pH regulator containing an ammonia aqueous solution and a second pH adjuster containing sodium hydroxide (NaOH) to the aqueous solution. That is, the aqueous solution having a pH of 11 or more can be formed by treating a neutral aqueous solution, such as distilled water, with multiple pH adjusters in multiple stages.

According to a specific embodiment, the neutral aqueous solution is treated with a first pH regulator containing an ammonia aqueous solution to maintain a pH of 9 to 10.5, and further treating it with a second pH adjuster containing sodium hydroxide, thereby capable of obtaining an aqueous solution having a pH of 11 or more, or 13.5 or more, or 13.5 to 14. Such a multi-step process allows for more precise control of the pH required for the coprecipitation method.

In addition, in the coprecipitation reaction step, the complexing agent is used to control the reaction rate of the coprecipitation reaction to more effectively obtain a catalyst precursor having a desired structure. A complexing agent refers to a molecule or ion that coordinates around a transition metal ion to form a complex ion. Without a complexing agent, some intermediate reactions may occur too quickly, thereby making it difficult to suppress particle growth. From this perspective, the use of a complexing agent is necessary to match the stoichiometry in a three-component system or higher system.

More specifically, the complexing agent can first be coordinate-bonded with a cobalt salt to form a cobalt complex compound. Thereby, this cobalt complex compound reacts gradually with a nickel salt and a metal(M) salt to produce a catalyst precursor having the desired atomic composition, uniform particle size distribution, and lattice structure according to the stoichiometric ratio, and an oxidation catalyst using the same.

The type of the complexing agent is not particularly limited, but in consideration of the appropriate reactivity with the cobalt, etc., an ammonium salt compound may be used, and specific examples thereof may include at least one selected from the group consisting of ammonium hydroxide(NH₄OH), ammonium sulfate((NH₄)₂SO₄), ammonium nitrate(NH₄NO₃), and ammonium phosphate monobasic((NH₄)₂HPO₄). Specifically, the complexing agent may be ammonium hydroxide.

Meanwhile, in the preparation method, the type of the metal salt is not particularly limited, and may have the form of a general salt known to be usable in a coprecipitation reaction. However, in a more specific example, the metal salt may have the form of an acid addition salt such as a nitrate in which a nitrate ion is bonded to each of these metals, an acid addition salt such as a sulfate in which a sulfate ion is bonded to each of these metals, or a hydrate thereof.

In this way, an acid addition salt having a relatively low unit price can be used as a reactant to prepare a catalyst precursor and an oxidation catalyst, which can improve the economic feasibility and mass productivity of the overall preparation process of the oxidation catalyst.

In addition, in order to form a cobalt complex compound at an appropriate ratio and preferably control the reaction rate using the above-mentioned complexing agent, it is preferable that the molar ratio of the metal ion of the metal salt: the complexing agent satisfies 1:0.1 to 1:1, or 1:0.2 to 1:0.6, or 1:0.2 to 1:0.4.

Through the above-mentioned coprecipitation reaction step, a catalyst precursor containing each metal element with a desired atomic composition can be prepared. Such a catalyst precursor may be in the form of a hydroxide compound or a sulfoxide compound containing each metal element in the same molar ratio as the oxidation catalyst to be formed in a subsequent step.

Meanwhile, after the coprecipitation reaction step, if necessary, a step of drying the catalyst precursor at a temperature of 50°C or more, or 50 to 100°C, or 60 to 90°C may be further performed, and before such drying step, a step of washing the catalyst precursor one or more times, or 1 to 3 times, using water such as distilled water or alcohol such as ethanol may be further performed.

After the catalyst precursor is prepared through the above-mentioned process, calcination may be performed, for example, at 600°C or less, specifically 100 to 500°C, or 300 to 500°C, preferably 500°C, under an air atmosphere to prepare an oxidation catalyst of one embodiment.

If the calcination temperature is too high, the particle size of the oxidation catalyst may increase to thereby decrease its surface area, and also the catalytic active sites are filled, which may adversely affect the activity of the oxidation catalyst, which is not preferable.

Through the above-mentioned process, an oxidation catalyst for anion exchange membrane water electrolysis of one embodiment showing a large surface area, excellent catalytic activity and electrical conductivity can be prepared in an economical and efficient manner. Such an oxidation catalyst can be preferably used in an anode of an anion exchange membrane electrolysis system due to the excellent overall physical properties described above.

Specifically, an anode for anion exchange membrane water electrolysis comprising a catalyst layer including the above-mentioned oxidation catalyst formed on a gas diffusion layer can be provided.

In particular, the anode for anion exchange membrane water electrolysis can follow the configuration of a general anode for anion exchange membrane electrolysis system, except that it includes the oxidation catalyst of one embodiment.

Specifically, the anode according to the present disclosure can be contained in an amount of 0.1 to 10 mg/cm² per unit area of a gas diffusion layer, and preferably can be contained in an amount of 0.2 mg/cm². Within the above range, as the content of the oxidation catalyst increases, the performance of the anion exchange membrane electrolysis system can be improved. However, if the content of the oxidation catalyst increases excessively, the performance of the water electrolysis system may be rather deteriorated.

In addition, the oxidation catalyst according to an embodiment of the present disclosure is formed as an oxidation catalyst layer on a gas diffusion layer, and may have a porous structure.

The above-mentioned anode may be prepared according to a general method for preparing an anode of an anion exchange membrane water electrolysis system, except for the use of the oxidation catalyst of one embodiment, and therefore further description thereof will be omitted.

According to another embodiment of the disclosure, an anion exchange membrane water electrolysis system comprising the anode is provided. This water electrolysis system may include an anion exchange membrane; a cathode located on one side of the anion exchange membrane; and an anode of another embodiment located on the other side of the anion exchange membrane layer so that the catalyst layer is in contact with the anion exchange membrane. Specifically, the anion exchange membrane water electrolysis system according to one embodiment of the present disclosure may be a MEA (Membrane Electrode Assembly).

This may be an embodiment in which the water electrolysis performance is improved by including the oxidation catalyst and the anode of the above-mentioned embodiment.

Other matters may be realized with reference to an anion exchange membrane water electrolysis system widely known in the art.

Hereinafter, preferable examples are presented for better understanding the present disclosure. However, the following examples are only for illustrating the present disclosure, and the present disclosure is not limited to or by them.

### Synthesis of Catalyst

First, 1 to 4 L of distilled water(DIW) was filled into a reactor, and an ammonia aqueous solution was added as the first pH adjuster, and then the mixture was stirred at 600 rpm or more to maintain the pH inside the reactor at 10.5. A NaOH solution was added as the second pH adjuster to maintain the pH inside the reactor at 11 or less.

After that, an ammonia(NH₄OH) aqueous solution was mixed.

Next, as metal precursors for forming a catalyst, Ni(NO₃)₃, Co(NO₃)₂, Fe(NO₃)₃, CuSO₄, and MnSO₄ dissolved in distilled water were used, and the molar ratio of Ni: Co: Fe: Cu: Mn precursors was adjusted to prepare a spinel catalyst having the metal molar ratio of Table 1 below.

The metal aqueous solution thus prepared and a mixture of NaOH and NH₄OH were introduced into the reactor using a metering pump. NaOH was used as a precipitant with a concentration of 1.0 mol/L. Next, the stirring speed in the reactor was 300 to 500 rpm. At this time, the molar ratio of the complexing agent NH₄OH was adjusted to metal ion: ammonia solution = 1:0.2 to 1:0.4. The reaction was carried out for 24 hours or more .

When the reaction was completed, the precipitate was separated and washed with distilled water (DIW). After that, the sample was dried in an oven at 80°C for 12 hours. The dried sample was heat-treated at a temperature of 500°C or less.

Table 1 below shows the catalysts of Examples 1 to 4 and Comparative Examples 1 to 4 prepared according to the above preparation method.

**[Table 1]**

| Category | Catalyst |
|---|---|
| Comparative Example 1 | Ni(Fe₂)O₄ |
| Comparative Example 2 | Ni(Mn₂)O₄ |
| Comparative Example 3 | Cu(Co₂)O₄ |
| Comparative Example 4 | Ni(Co_{1.5}Ni_{0.5})O₄ |
| Example 1 | Ni_{0.5}Cu_{0.5}(Co_{1.5}Fe_{0.5})O₄ |
| Example 2 | Ni_{0.5}Cu_{0.5}(Co_{1.5}Mn_{0.5})O₄ |
| Example 3 | Ni(Co_{0.9}Fe_{0.24}Ni_{0.86})O₄ |

### <Experimental Example 1> SEM Image Measurement

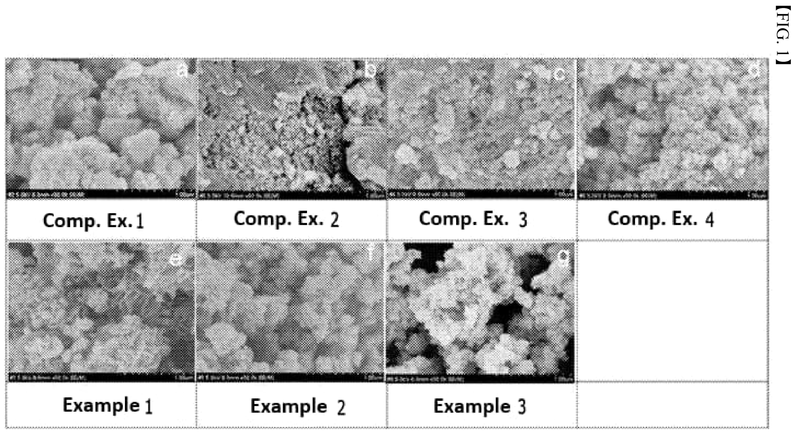

First, the oxide catalysts of Comparative Examples 1 to 4 and Examples 1 to 3 were analyzed using a scanning electron microscope(SEM), and the photographs are shown in FIG. 1.

The spinel-structured catalysts(AB₂O₄) of Comparative Examples (Comparative Examples 1, 2, 3, 4) to which no dopants were added or which were not four-component systems were found to have dense surfaces with almost no pores on the particle surface. The dense structure increases the density of the particles and decreases the surface area, which is disadvantageous for use as a catalyst.

It was confirmed that the spinel-structured catalysts of Examples 1 to 4 to which dopants were added had smaller particle sizes and the catalyst surface had a flake shape having a porous structure. Therefore, it was confirmed that the surface area of the catalyst of Examples increased compared to Comparative Examples.

### <Experimental Example 2> XRD Measurement

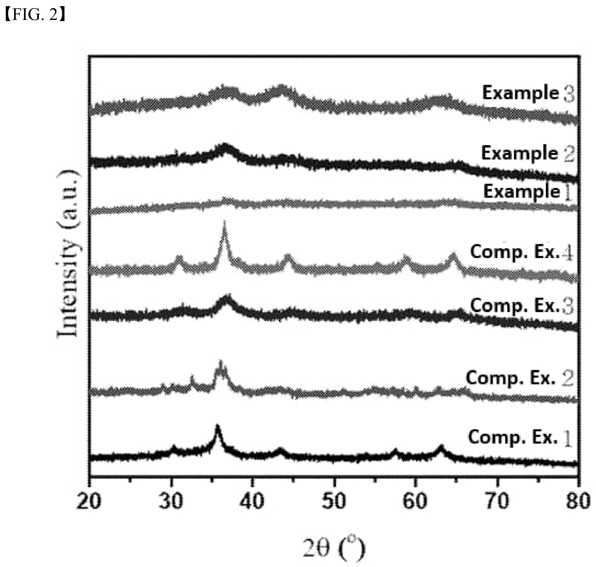

FIG. 2 shows the XRD patterns of the oxidation catalysts of Comparative Examples 1 to 4 and Examples 1 to 3.

Comparative Examples 1 to 4 showed a spinel structure (AB₂O₄).

It was confirmed that the crystallinity of the spinel structure of Examples to which dopants were added was reduced. It was understood that when the metal atoms in the crystal lattice were replaced by the dopants, the distortion of the structure occurred due to the difference in ion size. Thus, the crystallinity was reduced due to the distortion, and defects were generated. These defects were understood to not only facilitate the adsorption of reactants but also serve as a passage for electron transfer. In addition, the defective sites act as an active site of the catalyst, thereby facilitating the adsorption of OH- ions in the oxygen evolution reaction (OER). That is, the lower the crystallinity, the higher the activity of the catalyst.

Referring to FIG. 2, it was confirmed that as the dopant was added to the spinel structure (AB₂O₄), the crystallinity of the catalyst was lowered. This can be confirmed numerically as an overvoltage, and referring to the results of Experimental Example 6 below, the overvoltage of Examples in which nickel(Ni), cobalt(Co), iron(Fe), and manganese(Mn) were added as dopants was lower than that of Comparative Examples.

### <Experimental Example 3> Measurement of particle tap density

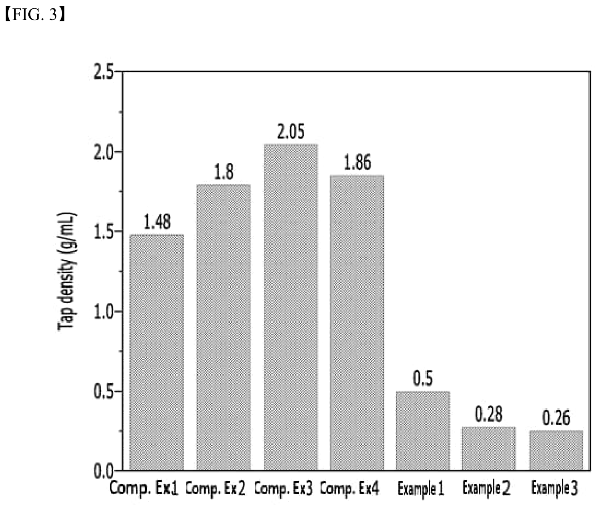

FIG. 3 and Table 2 show the tap density of the oxide catalysts of Comparative Examples 1 to 4 and Examples 1 to 3. The particle tap density shows the stacked density of the particles, and thus is an important indicator for predicting a porous catalyst. If the tap density of the catalyst is high, layer separation occurs during the slurry preparation process, making uniform coating difficult. If the tap density is too low, that is, if it has a lower tap density than Examples, the viscosity increases during the slurry preparation process, making it difficult to coat the water electrolysis electrode.

Comparative Examples, which are pure spinel structure catalysts, have high crystallinity and thus increase in density, whereas the catalysts of Examples, in which the dopants are substituted within the crystal lattice, showed a tendency that the crystallinity is increased and the tap density is decreased. According to Table 1, it was found that the tap density varies depending on the type and content of the dopant. The tap density of the oxide catalyst according to an embodiment of the present disclosure may be 1 g/mL or less, specifically 0.4 to 0.6 g/mL.

**[Table 2]**

| Category | Tap density (g/mL) |
|---|---|
| Comparative Example 1 | 1.48 |
| Comparative Example 2 | 1.80 |
| Comparative Example 3 | 2.05 |
| Comparative Example 4 | 1.86 |
| Example 1 | 0.5 |
| Example 2 | 0.28 |
| Example 3 | 0.26 |

### <Experimental Example 4> Measurement of Particle Size Distribution (PDS)

FIG. 4 and Table 3 show the results of measuring the catalyst particle size after the slurry was prepared by mixing the oxide catalysts synthesized in Comparative Examples 1 to 4 and Examples 1 to 3 with the solvent.

**[Table 3]**

| Category | Composition | D₁₀ (µm) | D₅₀ (µm) | D₉₀ (µm) | Span ((D₉₀-D₁₀)/ D₅₀) |
|---|---|---|---|---|---|
| Comparative Example 1 | Ni(Fe₂)O₄ | 0.6 | 3.7 | 19.4 | 5.08 |
| Comparative Example 2 | Ni(Mn₂)O₄ | 4.2 | 7.5 | 13.0 | 1.17 |
| Comparative Example 3 | Cu(Co₂)O₄ | 0.6 | 7.4 | 48.0 | 6.41 |
| Comparative Example 4 | Ni(Co_{1.5}Ni_{0.5})O₄ | 0.1 | 2.5 | 14.1 | 5.60 |
| Example 1 | Ni_{0.5}Cu_{0.5}(Co_{1.5}Fe_{0.5})O₄ | 3.0 | 16.5 | 46.0 | 2.61 |
| Example 2 | Ni_{0.5}Cu_{0.5}(Co_{1.5}Mn_{0.5})O₄ | 1.3 | 3.4 | 7.0 | 1.68 |
| Example 3 | Ni(Co_{0.9}Fe_{0.24}Ni_{0.86})O₄ | 1.1 | 2.5 | 5.2 | 1.64 |

In Comparative Examples 1, 2 and 3, the average particle size(D₅₀) of the pure spinel-structured(AB₂O₄) oxide catalysts was in the range of 3.7 to 7.5 µm. However, the spinel-structured oxide catalysts of Examples 2 and 3 containing the dopant had an average particle size(D₅₀) in the range of 2.5 to 3.4 µm. This is because the dopants inhibit the growth of particles and make them have a flake structure.

According to FIG. 4, the catalyst particles of Examples 1 to 3 have a single-particle particle size distribution. In addition, the Span ((D₉₀-D₁₀)/D₅₀) of the particle size distribution was calculated, and as a result, it was confirmed that Examples 1 to 3 had a much larger Span value than Comparative Examples 1, 3 and 4. That is, it was confirmed that the catalyst particle size distribution of Examples 1 to 3 was distributed in a narrower range and had a uniform size.

It was found that the catalyst of the present disclosure to which dopants were added was formed with a uniform size compared to the pure spinel-structured catalyst. This is because the present disclosure prepares an oxide catalyst using a dopant, which limits particle growth, forms a flake structure, and minimizes agglomeration. Therefore, the oxide catalyst according to the present disclosure can have a uniform particle size distribution.

### <Experimental Example 5> Evaluation of Catalytic Performance

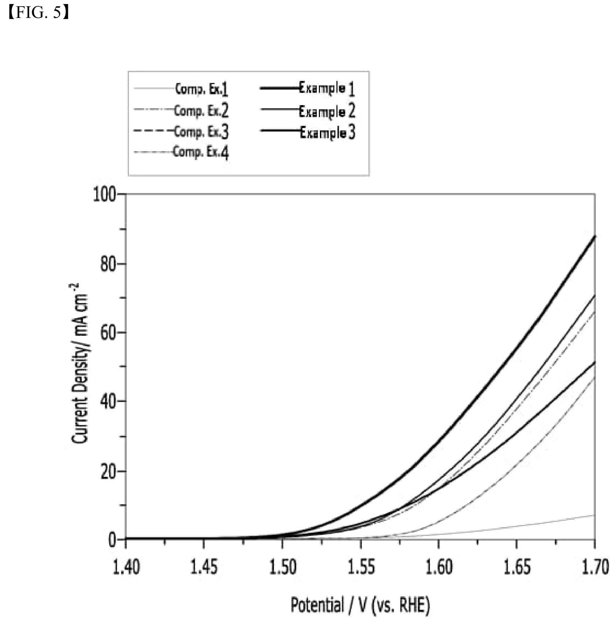

FIG. 5 shows a linear sweep voltammetry(LSV) for evaluating the oxygen evolution reaction(OER) by applying 0.2 mg cm⁻² of an oxide catalyst to a rotating disk electrode(RDE).

The three-electrode system used Hg/HgO as a reference electrode, and a Pt coil as a counter electrode. The evaluation was performed while rotating at 1600 rpm in a 1 M KOH electrolyte. The evaluation results are shown in Table 4 below.

The pure spinel (AB₂O₄) structured catalysts prepared in Comparative Examples 1, 2, and 3 showed a high overvoltage of 352 to 531 mV at a current density of 10 mA · cm⁻². In particular, the Ni(Mn₂)O₄ catalyst was shown to be difficult to use in an alkaline atmosphere because it not only showed a high overvoltage but also transformed into MnO₄²⁻ ions and dissolved in an oxygen evolution reaction(OER) atmosphere.

In Examples 1, 2 and 3, the catalysts showed an overvoltage of 310 to 351 mV at a current density of 10 mA · cm⁻². The performance of the NiCo_{1.8}Fe_{0.2}O₄ catalyst, which was doped with a small amount of iron(Fe) in NiCo₂O₄, was the most excellent. In Examples 1 and 3, the catalyst using iron(Fe) as a dopant showed a tendency to increase in performance.

FIG. 5 shows the results of impedance(EIS) measurements of Comparative Examples 1 to 4 and Examples 1 to 3. The catalysts of Examples 1 to 3, which have added dopants to Comparative Examples 1 to 4, was found to have low resistance. The catalyst of Example 3 showed the lowest charge transfer resistance.

**[Table 4]**

| Category | Overvoltage (mV @ 10 mAcm⁻²) |
|---|---|
| Comparative Example 1 | 376 |
| Comparative Example 2 | 531 |
| Comparative Example 3 | 352 |
| Comparative Example 4 | 388 |
| Example 1 | 346 |
| Example 2 | 351 |
| Example 3 | 321 |

### <Experimental Example 7> Single cell evaluation

The structure of the single cell is a structure in which each cathode (reduction electrode) and anode (oxidation electrode) portions are symmetrically formed of a gas diffusion layer(GDL), a bipolar plate, a current collector, and an endplate on the basis of the fabricated MEA.

The gas diffusion layer of the cathode used a carbon paper with a thickness of 300 µm coated with an MPL layer, and the gas diffusion layer of the anode used Ni foam with a thickness of 350 µm. The bipolar plate is made of Ni plate, and the flow channel was formed in a serpentine shape with a depth of 1 mm, and the bipolar plate thickness was 3 mm. The endplate was 3 mm thick and made of Ni. The gasket used a Teflon sheet with a thickness of 250 µm.

The catalyst coating ink was prepared with a mixed solvent composition of IPA 90 wt.%: DIW 10 wt.% using the sonication method, and the evaluation catalyst was prepared at a content of about 1 wt.% using the sonication method, and the ionomer was added as Fumatech product at a content of 30% relative to the catalyst.

The MEA was prepared using a Sono spray coater, wherein the loading amount of the oxidation catalyst of Comparative Example 3 or Example 3 at a substrate temperature of 50°C was adjusted to 2 mg/cm², and the cathode catalyst was prepared using the same method as TKK Pt/C (Pt 50 wt.%) and the loading amount was adjusted to 0.4 mg/cm².

The membrane used was Fumatech FAA-3-50 product, and the effective active area was 5 cm².

The fabricated MEA was dried at 70°C for about 2 minutes and then used for single cell assembly. The fastening pressure during single cell assembly was 70 IN.LB.

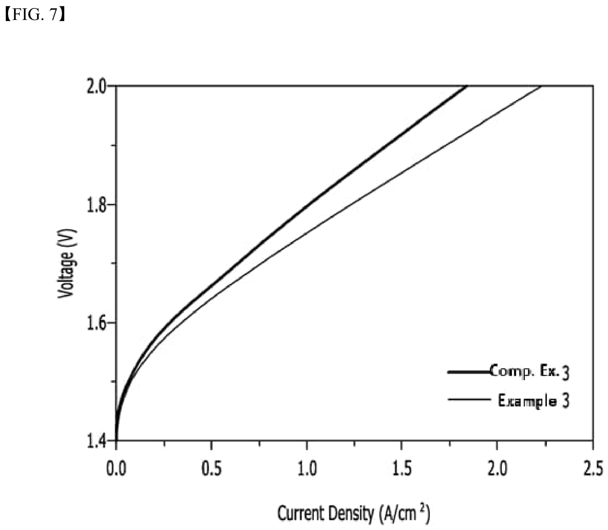

The assembled single cell was mounted on an electrolysis station, and after 30 minutes of preheating, electrolysis was evaluated using a linear sweep scenario at an interval of 0.01 V/10 sec from 1.45 V to 2.1 V. The electrolyte used at this time was KOH 1M, with a flow rate of 90 ml/min, a cell temperature of 60°C, and normal pressure. The evaluation was performed, and the results are shown in FIG. 7.

The oxide catalyst of Comparative Example 3 showed 0.64 A/cm² at 1.7 V, 1.42 A/cm² at 1.9 V, and 1.84 A/cm² at 2.0 V. The oxide catalyst of Example 3 showed 0.76 A/cm² at 1.7 V, 1.73 A/cm² at 1.8 V, and 2.22 A/cm² at 2.0 V.

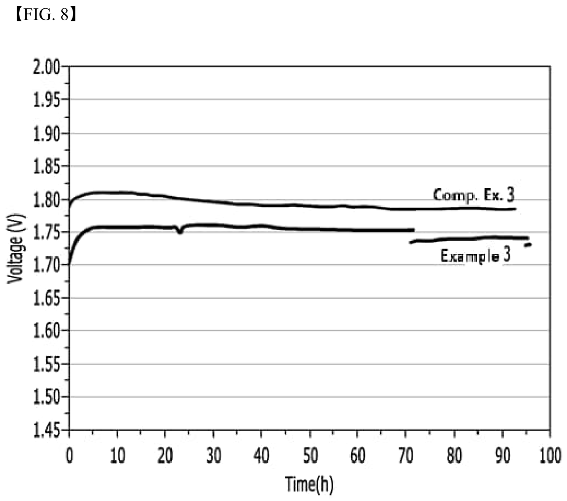

FIG. 8 shows the durability evaluation results of the oxide catalysts of Comparative Example 3 and Example 3 at a current density of 1 A/cm². The voltage of Comparative Example 3 was improved by 40 mV to 1.78 V and the voltage of Example 3 by 1.74 V for 95 hours.

From the above results, it was confirmed that the oxide catalyst of Example 3 not only had the most excellent self-activity, but also had durability.

## Claims

1. An oxidation catalyst for anion exchange membrane water electrolysis comprising a spinel-based oxide of the following Chemical Formula 1:
[Chemical Formula 1] ***Ni*₁*₋ₐXₐ*[*Co*₂*_{-b-c}Y_{b}Z_{c}*]*O₄***
in Chemical Formula 1, (0≤a<1), (0≤b<2), and (0≤c≤2), with the proviso that both b and c are not 0,
the metal (X) is Co, Fe, Mn, Mg, Zn, or Cu,
the metal (Y) is Ni, Fe, or Mn,
the metal (Z) is Ni, Fe, or Mn, and
the metals (Y) and (Z) are different from each other.

2. The oxidation catalyst for anion exchange membrane water electrolysis according to claim 1, wherein:
the oxidation catalyst for anion exchange membrane water electrolysis comprises a spinel-based oxide of the following Chemical Formula 1-1 or Chemical Formula 1-2:
[Chemical Formula 1-1] *Ni*₁*₋ₐXₐ*[*Co*₂*_{-b'}Y_{b'}*]***O*₄**
[Chemical Formula 1-2] ***Ni*[*Co_{2-b"-c"}Y_{b"}Z_{c"}*]*O₄***
in Chemical Formula 1-1, (0<a<1), and (0<b'<2),
in Chemical Formula 1-2, (0<b"<2), and (0<c"<2), and
the metals X, Y, and Z in Chemical Formula 1-1 and Chemical Formula 1-2 are the same as defined in claim 1.

3. The oxidation catalyst for anion exchange membrane water electrolysis according to claim 2, wherein:
in Chemical Formula 1-1, (0.4≤a≤0.6), and (0.4≤b'≤0.6).

4. The oxidation catalyst for anion exchange membrane water electrolysis according to claim 2, wherein:
in Chemical Formula 1-2, (0.2≤b"≤0.3), and (0.8<c"<0.9).

5. The oxidation catalyst for anion exchange membrane water electrolysis according to claim 1, wherein:
in Chemical Formula 1,
the metal (X) is Cu,
the metal (Y) is Fe or Mn, and
the metal (Z) is Ni.

6. The oxidation catalyst for anion exchange membrane water electrolysis according to claim 1,
comprising one or more spinel-based oxides selected from the group consisting of Ni_{0.5}Cu_{0.5}(Co_{1.5}Fe_{0.5})O₄, Ni_{0.5}Cu_{0.5}(Co_{1.5}Mn_{0.5})O₄, and Ni(Co_{0.9}Fe_{0.24}Ni_{0.86})O₄.

7. The oxidation catalyst for anion exchange membrane water electrolysis according to claim 1,
the catalyst has a particle size span ((D₉₀- D₁₀)/D₅₀) of 1.0 or more and 5.0 or less.

8. The oxidation catalyst for anion exchange membrane water electrolysis according to claim 1, wherein:
the catalyst has a tap density of 1 g/mL or less.

9. The oxidation catalyst for anion exchange membrane water electrolysis according to claim 1, wherein:
the catalyst exhibits an overvoltage of 310 to 360 mV at a current density of 10 mA cm⁻².

10. A preparation method of an oxidation catalyst for anion exchange membrane water electrolysis, the method comprising the steps of:
coprecipitating a plurality of metal salts in a water solution having a pH of 11 or more in the presence of a complexing agent to form a catalyst precursor; and
calcining the catalyst precursor at a temperature of 600°C or less to form a spinel-based oxide of the following Chemical Formula 1:
[Chemical Formula 1] ***Ni*₁*₋ₐXₐ*[*Co*₂*_{-b-c}YₐZ_{c}*]*O₄***
in Chemical Formula 1, (0≤a<1), (0≤b<2), and (0≤c≤2), with the proviso that both b and c are not 0,
the metal (X) is Co, Fe, Mn, Mg, Zn, or Cu,
the metal (Y) is Ni, Fe, or Mn,
the metal (Z) is Ni, Fe, or Mn, and
the metals (Y) and (Z) are different from each other.

11. The preparation method of an oxidation catalyst for anion exchange membrane water electrolysis according to claim 10, wherein:
in Chemical Formula 1,
the metal (X) is Cu,
the metal (Y) is Fe or Mn, and
the metal (Z) is Ni.

12. The preparation method of an oxidation catalyst for anion exchange membrane water electrolysis according to claim 1, wherein:
the complexing agent includes at least one selected from the group consisting of ammonium hydroxide(NH₄OH), ammonium sulfate((NH₄)₂SO₄), ammonium nitrate(NH₄NO₃), and ammonium phosphate monobasic((NH₄)₂HPO₄).

13. The preparation method of an oxidation catalyst for anion exchange membrane water electrolysis according to claim 10, wherein:
the plurality of metal salts each have the form of an acid addition salt of a metal or a hydrate thereof.

14. An anode for anion exchange membrane water electrolysis comprising the oxidation catalyst according to claim 1 formed on a gas diffusion layer.

15. The anode for anion exchange membrane water electrolysis according to claim 14, wherein the oxidation catalyst is included in an amount of 0.1 to 10 mg/cm² per unit area of the gas diffusion layer.

16. An anion exchange membrane water electrolysis system comprising:
a polymer electrolyte layer;
a cathode located on one side of the polymer electrolyte layer; and
the anode according to claim 14 located on the other side of the polymer electrolyte layer so that the catalyst layer is in contact with the polymer electrolyte layer.
